# EUROPEAN PATENT APPLICATION

(11) **EP 3 496 413 A1**
(43) Date of publication of application: **12.06.2019**
(21) Application number: 18198330.5
(22) Date of filing: 18.03.2011
(51) Int. Cl.: H04N 21/658, H04N 21/414, H04N 21/2343, H04N 21/45, H04N 21/4402, H04N 21/242, G06F 3/14

(54) **DISTRIBUTION OF REAL-TIME VIDEO DATA TO REMOTE DISPLAY DEVICES**

(30) Priority: 19.03.2010 US 31563410 P
(62) Divisional of application: 11749276.9
(71) Applicant: G2 Technology, Austin, Texas 78704 (US)
(72) Inventor: HINIC, Marco, Braine-L'Alleud (BE)
(74) Representative: Michalski Hüttermann & Partner Patentanwälte mbB

(57) **Abstract**

The invention relates to a video data distribution system for distributing video data of a source video to a plurality of display devices (106, 108,109,110). The video data distribution system comprises:
a video server (102) connected to a data communications network (104) which is connected to the plurality of display devices (106, 108,109,110) each requiring a data format, where the data formats required by different display devices (106, 108,109,110) can be different;
wherein the video server (102) is adapted to
perform a discovery process to discover connected display devices (106,108,109,110);
query discovered display devices (106, 108,109,110) about properties and settings of the respective display device (106,108,109,110);
apportion the video data to the display devices (106,108, 109,110);
calculate and prepare portions of the video data for each display device (106, 108, 109, 110) based on the properties and settings of the respective display device (106, 108, 109, 110) including a 'pixel mapping' called mapping relationship between pixel of the source video to pixel on the respective display device;
output the video data portions in the respective data format appropriate for each display device (106, 108,109,110); and
output a coordination signal whereby the presentation of the video data across the plurality of display devices (106,108,109,110) are synchronized to produce a coordinated display across the display devices (106, 108,109,110).

## Description

### RELATED APPLICATION

This Patent Application claims priority of US Provisional Application No. 61/315,634 filed on 19 March 2010.

### TECHNICAL FIELD OF THE INVENTION

The invention relates to equipment for the processing and distribution of video data to remote display devices.

### BACKGROUND OF THE INVENTION

In the events and entertainment industry, video display devices are used to display video images or parts of video images to enhance the audience experience. The video images can be supplied by several sources such as DVD players, hard disk recorders, media players and Personal Computers playing digital video formats such as media servers. This video data is fed into a variety of display devices such as video projectors, CRT screens, LCD screens, LED screens and digital lighting fixtures, using a certain physical and logical communication system.

In prior art systems, the video data may be transported over a variety of communication channels each requiring its own physical, electrical and logical interface. At the present time, a myriad of communication protocols, communication technologies and communication interfaces may be used to connect the source to the different display devices. For example, DVI, RGB, SDI, HD-SDI, DMX512, ACN, Ethernet, and Fiberoptic are all commonly used communication interfaces. Display device manufacturers often implement their own vendor specific protocols to transport video data from the source to the display device.

It is more common than not that a variety of brands and types of display devices are brought together for an event. Because these mixed systems may require a plurality of different protocols, technologies and interfaces, set up and operation of such mixed systems can be complex and often result in conflicting communication ,lack of coordinated response, excessive trouble shooting, customization, tweaking and difficulty in operating consistently.

In the prior art, each manufacturer of display devices may have its own dedicated and specialized physical and logical convertors to convert the signals for the display devices. These convertors are expensive and when a set-up requires convertors of different manufacturers, may increase the cost and complexity of the whole project drastically. These setups can also result in problematic operation where coordinated control is necessary.

In the end, the different communication systems, methods and devices cause less usability and higher costs for the user. For the system integrator, operator and technicians that have to build, manage and operate the setup, this makes it an expensive job with high complexity and increased risk of failure.

It is further known to use a common high-level protocol where full video data is provided to every device on the network. For example, a system such as HDBaseT provides a means to distribute high-resolution video data to multiple connected devices. However such systems make little to no attempt to format the video signal for the attached devices and it is left to each connected display device to extract the data it wants/needs, format it to fit its display and then display it. This adds a considerable processing burden to the display device lack of coordination in response and may require much more powerful hardware and software both adding to the cost of the display device and increasing its complexity.

It is also well known to use a media server such as the ArKaos MediaMaster Express to generate custom video signals targeted to a specific display device. Such signals may be cropped and positioned from a larger image so that the display device displays only a portion of that larger image. However such systems do not use a common distribution network for multiple devices and do not communicate with the display device to establish the format of the signal it needs.

It would be advantageous to provide an improved video communication and distribution system for mixed systems.

### BRIEF DESCRIPTION OF THE DRAWINGS

For a more complete understanding of the present invention and the advantages thereof, reference is now made to the following description taken in conjunction with the accompanying drawings in which like reference numerals indicate like features and wherein:
**FIGURE 1** illustrates an exemplary embodiment of a networked set-up of the media server and display devices;
**FIGURE 2** illustrates a sequence diagram of the discovery process;
**FIGURE 3** illustrates a flowchart of the negotiation process;
**FIGURE 4** illustrates an example of video data organization, and;
**FIGURE 5** illustrates a sequence diagram of the video distribution process.

### SUMMARY OF THE INVENTION

The purpose of the disclosed invention is to solve the problems caused by multiple different, communication means between a video source and display devices, reduce the complexity of the different communication systems and, by doing this, decreasing the overall cost of the system, system set-up, take-down and operation.

The disclosed invention provides a method and system for distributing video data to a wide variety of remote display devices over a local area network. The video data comprises the image information that has to be displayed by the device and is independent of the target display device and its properties. The video data will be created and prepared by the server such that low-cost display devices with little processing power can also display the data without any processing.

The network protocol, which may be implemented by display device manufacturers, is intended to support a broad spectrum of both video and media servers and display devices. The protocol will support the most common properties and characteristics of display devices and the video and media servers and leave room for future expansion of extra properties.

One advantage is that the above-mentioned complexity with set-ups of different video sources and display devices will be avoided because it provides one common protocol. Another advantage is that the protocol will allow for less expensive, very basic display devices that have little or no video processing capability of their own as the server will do the processing for them. Both advantages result in easy configuration and setup with, if preferred, inexpensive display devices, also lowering the total cost of the equipment, set-up and operation of the system.

### DETAILED DESCRIPTION OF THE INVENTION

Preferred embodiments of the present invention are illustrated in the **FIGURES,** like numerals being used to refer to like and corresponding parts of the various drawings.

The present invention generally relates to a communication protocol, specifically to a communication protocol for the distribution of data to display devices. The protocol is constructed such that there is no limitation on the type, size, resolution, structure and manufacturer of the display device.

The intent is that the protocol may also be implemented on display devices with limited processing power, memory and software. This way, the protocol can be implemented on small-scale, inexpensive, display devices.

One purpose of the network protocol is to provide a method for easy configuration that makes it possible to easily add, remove and change display devices and to configure and set-up said display devices with the least possible manual configuration work. Another purpose of the protocol is to provide a generic method to distribute video data to all the display devices. All of these methods will be explained in the next paragraphs.

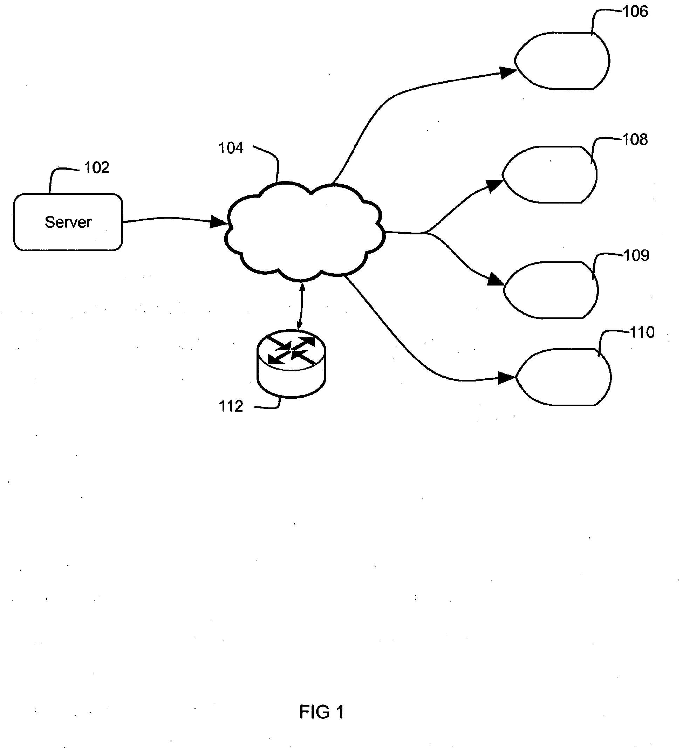

Referring to **Figure 1** where an illustrative example is provided of a set-up where the protocol is used. Server **102** may be a computer or any other physical or logical device that produces real-time video data that can be displayed by a display device.

Display devices **106, 108, 109 and 110** are physical devices that are capable of converting video data to a visual representation and may be selected from a list including but not limited to: CRT screens, LCD screens, video projectors, LED screens, lighting fixtures. Display devices **106, 108, 109 and 110** may require device or system specific processing in hardware and/or software to do the convert of the video data to the desired visual representation.

The server **102** is connected using a wired or wireless connection to a network **104.** Display devices **106, 108, 109 and 110** are also connected to the network **104** in a wired or wireless manner. The network **104** may be any computer network based on the IP network protocol stack. In order to communicate with each other, the server **102** and the display devices **106, 108, 109 and 110** are preferably configured in the same network range. As is well known in the art, this can be done using static IP addresses or using a dynamic IP addressing system such as DHCP. A network component **112** such as a router, a network switch or any other network device or service can be used to build the network.

In the illustration, the number of servers and display devices has been limited for explanatory reasons. The protocol does not limit the number of servers and display devices that may work together though the network **104.**

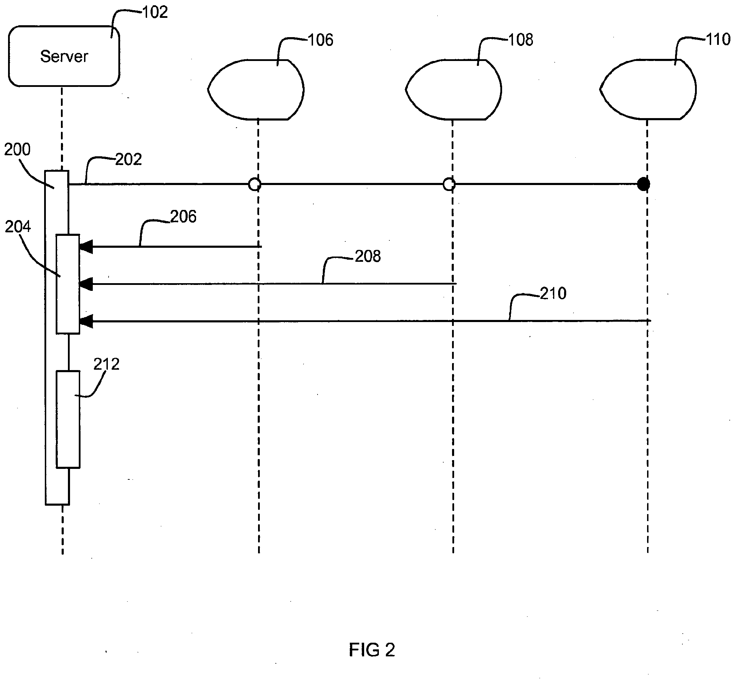

**Figure 2** depicts a sequence diagram for signal propagation during a discovery process 200 initiated by server **102** in search of connected display devices. Server **102** broadcasts a discovery message **202** over the network. The network manages the broadcasted message and makes sure every connected display device **106, 108 and 110** receives the broadcast discovery message **202.** Upon receipt of discovery message **202,** each display device **106, 108 and 110** individually answers with their specific discovery responses **206, 208 and 210** in a response phase **204.**

In one embodiment of the invention server **102** performs a discovery of the display devices **106, 108 and 110** that are available in the network. Server **102** initially broadcasts a discovery message **202** over the network using a UDP broadcast message. Each display device that is listening for those broadcast messages will answer with a discovery response **206, 208 and 210.** The discovery response may contain, amongst other items; a unique identification of the display device, information about the manufacturer, type, name of the display device and other basic properties.

Display devices support a basic set of properties which may include but not be limited to:
- Unique identification of the display device
- Unique identification of the manufacturer
- Number of available resolutions
- Number of available parameters
- Connection settings (such as the client port)
- Physical dimensions of the display device
- Pixel formatting options:
   a. Color composition - Information on the way the different color components should be formatted in the video data, these may include: which color components are used, how much data is allocated to each component, and in what order they are presented. For instance a color composition may be RGB with 4 bits Red, 4 bits and 4 bits Green. Or it may be YUV or any other combination of color components known in the art.
   b. Compression - Information about how the video data should be compressed.

In addition to this basic set of properties, the device may also have extra properties that are not known in advance. In this way, the protocol is flexible and extensible to support future expansion. Whether a display device has such extra properties may be indicated by the 'number of available parameters' property in the basic properties set.

The discovery sequence may be repeated as often as required or needed by the server. Although the discovery process requires processing time and power, it may be preferred, or even necessary, to perform the discovery sequence at set regular intervals. For instance repeatedly engaging the discovery process allows for the detection of newly connected display devices or to discover that display devices have been removed from the network or have otherwise become inaccessible.

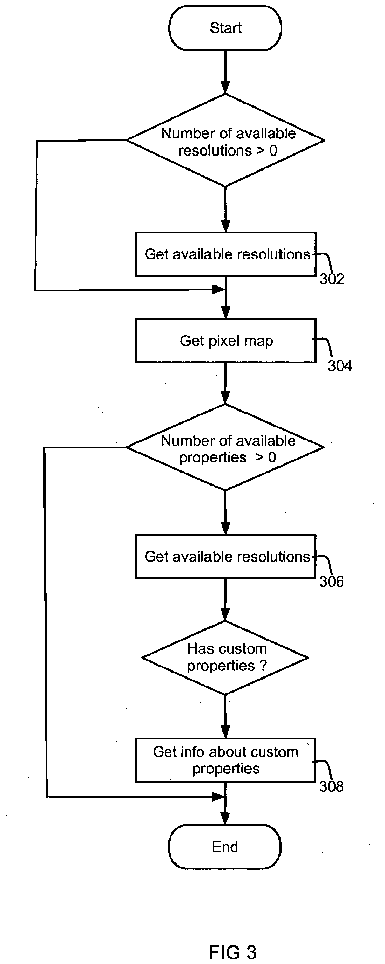

After the discovery sequence phases **202** and **204** has completed, server **102** may build or rebuild an internal list of registered display devices **106, 108 and 110** during a setup or setup confirmation phase **212.** Depending on the status of each display device that responded to discovery, the server may take several actions:
- If the display device was not already in the list of registered devices, the discovered display device is a new display device. In this situation, the server will start the negotiation process in which the server queries the properties and settings of the device. This is further explained in **Figure 3****.**
- If the display device was already in the list of registered devices from a previous discovery, the discovered display device is an existing display device. As the status of the display device has not changed, nothing specific needs to be done. If required by either the server or the connected display device, properties may be renegotiated.
- If a display device was already in the list of registered devices from a previous discovery but no longer responds to the discovery message **202,** it means that the device is no longer available in the network. This may be because the display device has been disconnected from the network, or because a network component **112** has been disconnected from the network. The server can decide whether to ignore the display device right away, or to wait for a number of unanswered discovery requests from this display device.

With this discovery sequence - that can be repeated as much as needed - the server can detect and configure display devices on the fly. Because the display device supply preferred, default values for the basic properties, the server can auto configure the display devices. Also, if a display device is removed from the network, the server can detect this and not tie-up processing and communciations bandwidth by sending data to a device that is no longer connected.

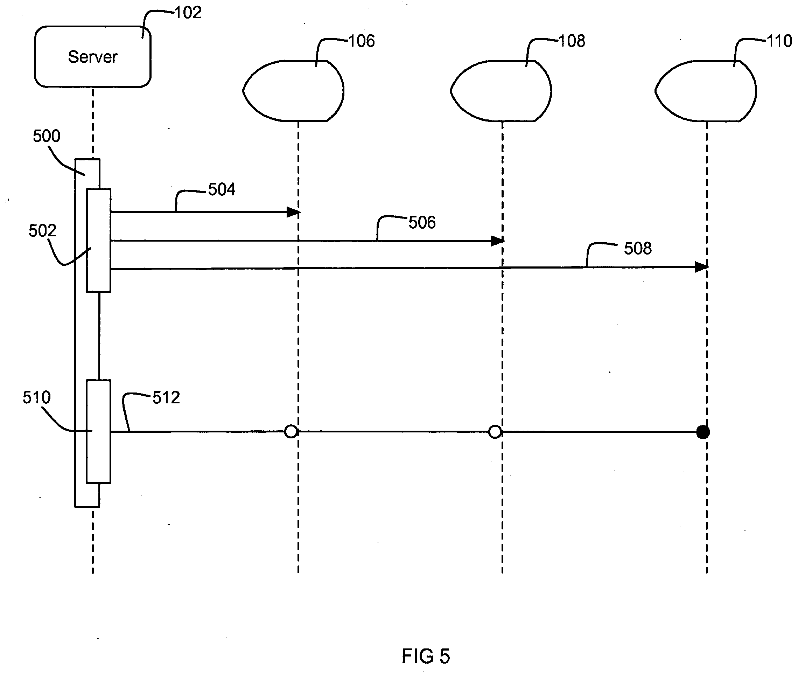

After the discovery sequence, the server knows which display devices are available for receiving video data during the video update sequences as explained in **Figure 5****.** Referring to **Figure 3****,** an exemplary sequence diagram of a sequence diagram, the server **102** may query a newly discovered display device **106** for its properties and settings. In this phase the server **102** may make a point-to-point connection over TCP/IP with the newly discovered display device **106** using the connection options that were supplied by the display device in discovery response **206.** Server **102** will use this point-to-point connection for the rest of the communication lifecycle. Once the connection is made, server **102** may query the newly discovered display device **106** about its properties and settings.

The properties queried may include but not be limited too:
- Available resolutions: **302,** depending on the 'Number of available resolutions' value in the discovery response **206,** server **102** will ask display device **106** for its available resolutions. If multiple resolutions are available, it's left to the implementation of the media server system to either automatically choose the best resolution or to let the user who configures the system choose.
- Pixel mapping: **304,** server **102** will query the newly discovered display device **106** about the manner pixels should be mapped. A pixel map means the mapping relationship between a pixel of the source video to a pixel on the display device. Depending on the complexity and capabilities of the display device, pixel mapping can be very straightforward or quite complex. To make implementation of the protocol as simple as possible on the display devices there are several ways to describe the pixel mapping. Depending on the geometry and purpose of the display device a manufacturer has the freedom to select the mapping that is best suited to the purpose of the device. The protocol is designed to support multiple types of pixel mapping including but not limited to:
   a. Simple pixel mapping: pixels are mapped in a rectangular format of a number of pixels wide and high. This is then defined by a pixel width and height. Pixels are laid out with equal space and in a defined way in the video data.
   b. 2D pixel mapping: pixels can be laid out in a 2D plane in any position on the *x* and/or *y* axes. This looks similar to the simple pixel mapping, but pixels are not necessarily laid out sequentially. Each pixel can be placed anywhere within the 2D plane.
   c. 3D pixel mapping: pixels can be laid out in a 3D shape on any position of the *x*, *y,* and/or *z* axes. This is an extension of the 2D pixel mapping and adds a third dimension (z).
      - Available properties: **306,** Depending on the 'Number of available properties' value in the discovery response **206,** server **102** will query the display device **106** for the available extra properties. The data provided may include: what those parameters are, what type the parameters are, and their current value. Display device **106 may** answer back with an array of property id's. The property ids are either a predefined id (predefined by the protocol), or the id of a custom property. In the case of a custom property server **102** may need to get further information **308** about that property such as: the name, the type (number, text, flag, action, etc.), the size, the range, the value, Examples of such properties may be brightness, contrast, temperature, supported frames per second.
      - Processing capability. Display device **106** may report its image processing capabilities back to server **102.** Based on this information the server may provide, for example, uncompressed video to devices with little processing capability or compressed video to devices with the processing power to deal with the decompression.

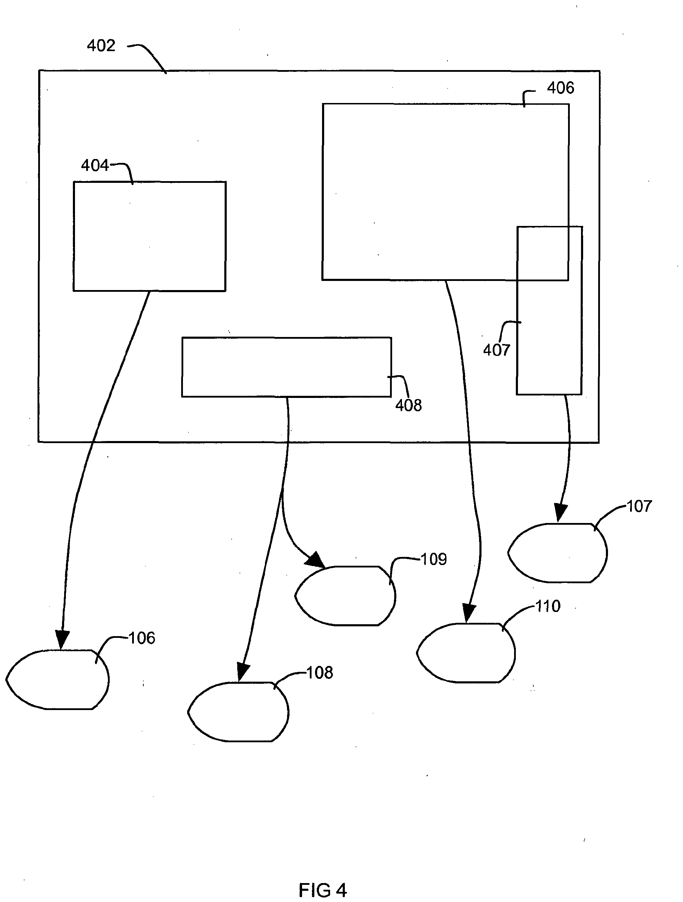

The diagram in **Figure 4** illustrates how the complete video data field **402** of server **102** may be divided into zones **404, 406, 407, 408.** A zone is a region or a part of the complete video data range generated by the server.

To increase the performance of the video data distribution only the relevant portion of the video data corresponding with zones **404, 406, 407, 408** is transmitted to each display device **106, 108, 109, 108** respectively rather than the complete video data for the whole field **402** to each device. In the illustrated example, data corresponding to zone **404** is transmitted to display device **106,** data corresponding to zone **408** is transmitted to display devices **108 and 109,** and data corresponding to zone **406** is transmitted to display device **110.** In order for this to occur, server **102** has to calculate and prepare the video data for each individual display device, based on the negotiated properties and settings for that display device. As a consequence, the calculation and processing power is centralized in server **102,** enabling the display device to be a less powerful device with little processing capabilities.

Each of the display devices **106, 107, 108, 109 and 110** is allocated to receive data corresponding to one of the zones **404-408.** A zone may be allocated to more than one display device, but in the preferred embodiment a display device only receives video data corresponding to one zone.

**Figure 5** illustrates the distribution sequence of the video data. Video data is addressed and transmitted from server **102** to display devices **106, 107, 108, 109 and 110** using a point-to-point network connection. In the embodiment shown each display device **106, 107, 108, 109 and 110** receives only the portion of the video data that it should display. This means that each display device only gets the video data that it actually needs. This ensures maximum efficiency in the network while the protocol can be kept small and tidy without much overhead in the video data distribution process.

In a first phase **502,** server **102** generates video data **504, 506, 508.** Depending on the configuration and the allocation of video data and zones, the subset of video data is created for each device with only the necessary video data. The supplied video data depends on the zone assigned to the display device, the color components, the compression and the pixel mapping that is used. Server **102** then sends that video data to each individual display device, using a buffer message **504, 506, 508.** This means that display devices **106-110** each get their specific part of the video data that they need to show. The display devices **106, 108 and 110** do not receive the complete video data, but only the part that they actually need.

In the embodiment shown, display devices **106, 108 and 110** need not acknowledge or confirm the received data. The protocol may depend on the inherent error handling capabilities of a TCP/IP layer (or similar analog in other communication protocols) to handle any errors in the transmission.

In the next phase **510,** after the display devices **106, 108, 110** receive video data, server **102** may broadcast a present message **512** to all the display devices **106, 108, 110,** so that they can update their displays with the new video data in a coordinated and synchronized manner.

It is normal for video signals to utilize a refresh rate of at least 24 frames per second, with rates of 30 and 60 frames per second also well-known, although some devices may have a lower refresh rate. In some embodiments the protocol may repeat the buffer-present cycle with a frequency that matches the frame rate. However, depending on the defined zones frame rates and device capacities it may not always be necessary that a display device receives a buffer message **504, 506 or 508** in each cycle. Or the present message each cycle. In some embodiments the Server **102** may exclude display devices that have a lower refresh rate from some buffer messages.

While the invention has been described with respect to a limited number of embodiments, those skilled in the art, having benefit of this invention, will appreciate that other embodiments may be devised which do not depart from the scope of the invention as disclosed herein. It should be understood that various changes, substitutions and alterations can be made hereto without departing from the spirit and scope of the invention as described by the appended claims.

## Claims

1. A video data distribution system for distributing video data of a source video to a plurality of display devices (106, 108,109,110), the system comprising:
a video server (102) connected to a data communications network (104) which is connected to the plurality of display devices (106, 108,109,110) each requiring a data format, where the data formats required by different display devices (106, 108,109,110) can be different;
wherein the video server (102) is adapted to
perform a discovery process to discover connected display devices (106,108,109,110);
query discovered display devices (106, 108,109,110) about properties and settings of the respective display device (106,108,109,110);
apportion the video data to the display devices (106,108, 109,110);
calculate and prepare portions of the video data for each display device (106,108, 109,110) based on the properties and settings of the respective display device (106,108, 109, 110) including a 'pixel mapping' called mapping relationship between pixel of the source video to pixel on the respective display device;
output the video data portions in the respective data format appropriate for each display device (106, 108,109,110); and
output a coordination signal whereby the presentation of the video data across the plurality of display devices (106,108,109,110) are synchronized to produce a coordinated display across the display devices (106, 108,109,110).

2. The video data distribution system of claim 1, wherein each of the display devices (106,108,109,110) is selected from the list including CRT screens, LCD screens, video projectors, LED screens, and lighting fixtures.

3. The video data distribution system of claim 1 or 2, wherein the different display devices (106, 108,109,110) require at least two different data formats.

4. The video data distribution system of claim 3, wherein the properties of the respective display device (106,108, 109, 110) include different pixel mapping and/or resolutions, especially different resolutions.

5. A video data distribution system, especially the video data distribution system according to one of claims 1 to 4, comprising:
a server (102) connected -wired or wirelessly- via an Ethernet protocol to a plurality of display devices (106, 108,109,110) with different properties;
where the server (102) initially performs an automated discovery of the display devices (106, 108,109,110) concerning - unique identification numbers and properties including, a pixel mapping;
where a plurality of the display devices (106, 108,109,110) are assigned zones of an image data field wherein each zones represent a portion of the image field;
where the server (102) derives what data to be sent to individual display devices (106, 108,109,110) from each display device's assigned image field zones and each display device's properties
where the server (102) distributes individually derived data to the individual display devices in a data format appropriate for the display device.

6. The video data distribution system of claim 5, wherein the Ethernet protocol is UDP.

7. The video data distribution system of claim 5 or 6, wherein some of the display devices (106, 108,109,110) are not capable of processing a video formatted data, especially are lighting fixtures which have pixel mappings incompatible with video formatted data.

8. A video data format processing and video data distribution system, especially the video data distribution system according to one of claims 1 to 4, for a mixed system of video displays including lighting fixtures with no video processing capabilities comprising:
a video server connected via Ethernet network to a plurality of display devices which include video processing incapable lighting fixtures where the video servers process video formatted data to provide lighting fixture formatted data derived from the video formatted data based on a pixel mapping of the lighting fixture.

9. The video data distribution system of claim 8, wherein the pixel mapping of a plurality of the display devices that have no video formatted data processing capability have a pixel mapping scheme where pixels
do not have to be sequential and may be located anywhere in a two-dimensional space or
are defined by their location in a three-dimensional space.

10. The video data distribution system of claim 8 wherein the pixel mapping of a plurality of the display devices that have no video formatted data processing capability includes a pixel mapping with a pixel height and pixel width.

11. The video data distribution system of claim 8 wherein
the server outputs a coordination signal so that the displays behave in a coordinated manner and/or
the video data distributed to a display matches the color component combination of the display devices which is other than RGB and/or
the physical dimensions and nw the display device are used by the video server to derive video data format to distribute to that display device and/or
the video server factors in the physical size of display devices when processing video data from video formatted data to video data for the plurality of display devices.

12. A video data distribution system, especially the video data distribution system according to one of claims 1 to 4, comprising:
a video server that processes video data from video formatted data and distributes video data in a format matching the pixel mapping of a display device whose pixels are mapped in a geometric configuration that is not number of pixel rows by number of pixels per row.

13. The video data distribution system of claim 12 wherein
the video server also distributes video formatted data to video displays with video formatted pixel mappings, e.g. number of pixel rows by number of pixels per row and/or
the pixel map includes pixel height and width a/or
the pixel mapping scheme where pixels do not have to be sequential and may be located anywhere in a two-dimensional space.

14. The video data distribution system of claim 12 wherein
the video server uses zones (portions of video images) assigned to display devices to derive what data to distribute to each display device and the server outputs a coordination signal so that the displays behave in a coordinated manner.

15. The video data distribution system of claim 12 wherein
a video server factors in the physical dimensions of the fixtures as well as the pixel mapping of said fixtures.
